# EUROPEAN PATENT SPECIFICATION

(11) **EP 1 439 347 B1**
(45) Date of publication and mention of the grant of the patent: **13.06.2007**
(21) Application number: 03023054.4
(22) Date of filing: 14.10.2003
(51) Int. Cl.: F16N 31/00

(54) **Container for collecting and transporting drained oil from vehicle**
Behälter zum Auffangen von Motorenöl beim Ölwechsel
Récipient pour vidanger un moteur

(43) Date of publication of application: 21.07.2004
(73) Proprietor: Camoli, Marco, 40023 Castel Guelfo (Bologna) (IT)
(72) Inventor: Camoli, Marco, 40023 Castel Guelfo (Bologna) (IT)
(74) Representative: Paolini, Elena

(56) References cited:
- EP-A- 0 628 761
- US-A- 5 301 724
- US-A- 5 305 910
- US-A- 5 975 156
- US-B1- 6 345 692
- US-B1- 6 367 586

## Description

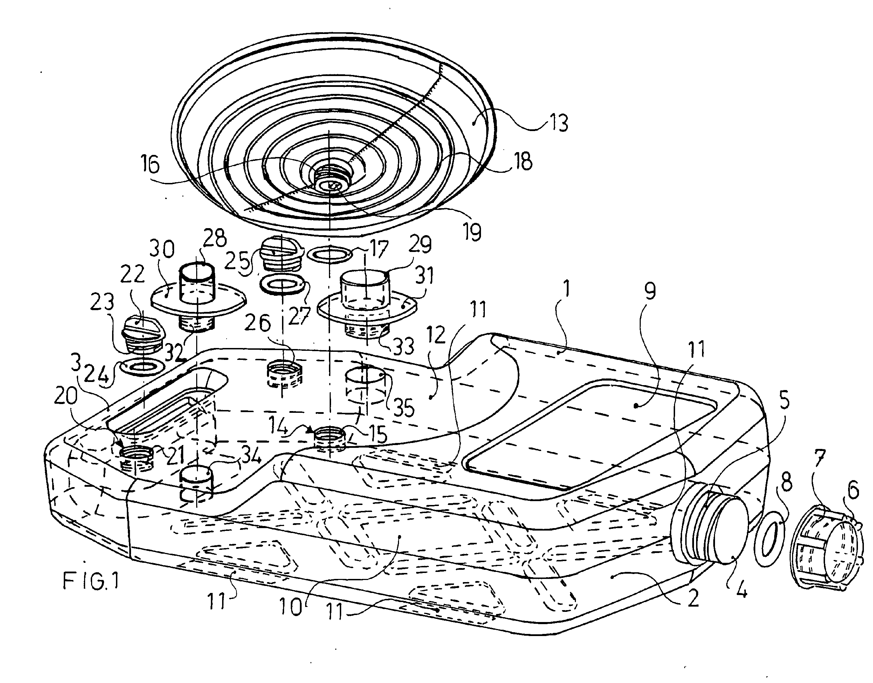

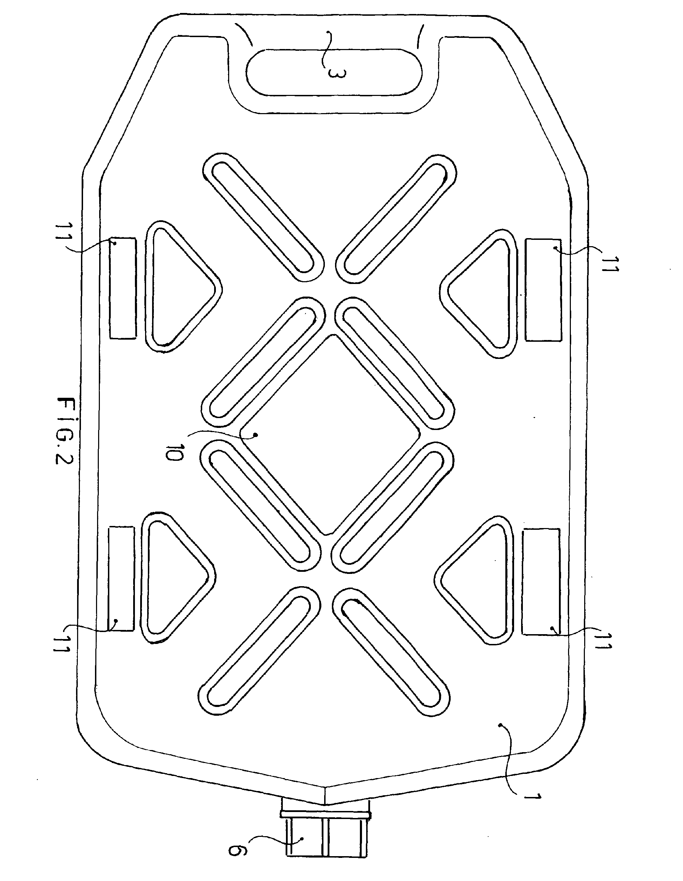

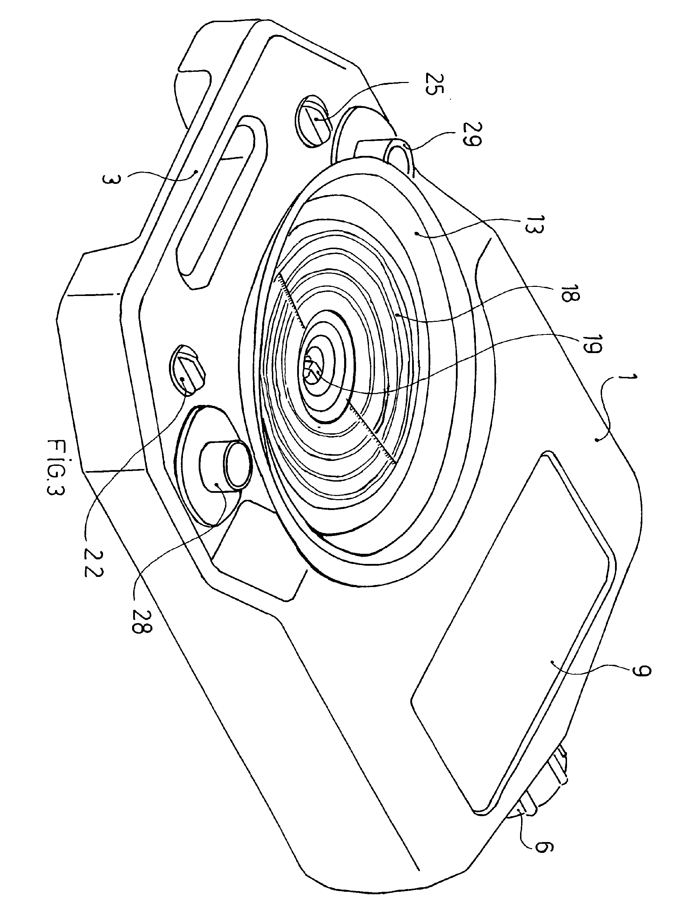

It is common practice for the collecting of oils drained from vehicles to use containers. These containers, as the beginning, are supply basin obtained from cut plastic containers. Then the same are turned into containers with suitable forms. In the art are known containers having the funnel-shaped top wall and with an internal chamber for accommodating the oil that is drained from the vehicle and for pouring it again into the containers for the discharge. As this regard, it is known the container described and shown in the EP 0 629 761. Then it is to consider that the aim of said plastic containers is that to reduce to minimum the dirtying both of the workers than of the surrounding where the work is made. The plastic containers known in the art have only the purpose to collect the drained oil and to be used to transport said oil into particular containers. Moreover said plastic containers are only to be used inside the workshop. The invented plastic container, instead, is born both for its use inside the workshop, for a work made to a specialistic worker, than for a motor vehicle owner that change the lubricating oil itself. Moreover the invented plastic container is able to realize also a second purpose not to be provided from the known oil collecting containers. Said invented container, infact, on the base of its shape, permits also the replace with new oil, after that the drained oil is taken away, and to do the necessary oil topping-up both inside the workshop than in elsewhere without that other means or tools need. For these reasons the invented container is very useful also during emergency situations where is not possible to have other means than that present onto the vehicle. The invented container then has production costs very low so to permit a big diffusion of the same. Moreover on it advertising parts are provided so to still reduce the cost for the obtained entrances and also to its purchase to a symbolic price buying the advertised goods. The invented container is illustrated in an indicative and not limiting way in the drawings of sheets 1, 2 and 3, in sheet 1 figure 1 is an exploded view of the different elements which determine the using of the plastic container 1- In sheet 2 figure 2 is view of the under wall of the container to show the space 10 and the velcro parts 11.In sheet 3 figure 3 is perspective view of the top wall of the container 1 with all different removable elements (13, 22, 25, 28 and 29) in position and with the advertising space 9. The invented container consists of a plastic body 1 with inside chamber 2 able to collect and to transport the drained oil. To make the container grip easy on a side a handle 3 is provided. On the opposite side a cylindrical protrusion 4 is provided with external thread 5. Said cylindrical protrusion 4 has a mouth to be closed through a cap 6 with inside thread 7 so to permit the no outlet of the inside oil. Moreover for a better seal and to avoid possible oil losses through the thread, a rubber O-ring 8 is placed in position. In the top outside wall the container 1 has a suitable space 9 to place, by means of stickers or in relief made through melting, oil advertisement or other. In this space is also present a part with a paper to write the vehicle distance in kilometres, so to have the possibility to know when the oil change is necessary on the base of the indicated distance in kilometres. The invented container then has a second advertising space 10 present onto the opposite side, i.e. in the under side. On said under wall also velcro parts 11 are provided to place the container1 in fixed way inside the boot of the vehicle. This on the base of the fact that the most of the vehicles have boots covered with carpet and consequently it is sufficient to press the containers 1 against said carpet to have a steady placing. In this way, infact, the rough part of the velcro" comes to stick onto the carpet so avoiding shaking and jerks of the container inside the vehicle. On the top outside way the container has a recess 12 where are disposed the removable elements to be used for the oil changing and for adding new oil inside the motor. For this aim a removable funnel 13 is provided to be screwed into the hole 14 presents onto the container so permitting the flow of the drained oil inside the chamber 2. Said hole 14 with an internal cylindrical part with thread 15. The thread 15 corresponding to the outside thread 16 of the cylindrical protrusion of the funnel 13. For a better seal an O-ring 17 is used. The funnel 13, moreover, has breakwater grooves 18. Said grooves18 have the aim to avoid splashes or discharges of motor oil in free falling inside the funnel 13. Moreover the grooves 18 have the function to avoid oil spill such as they have angulations able to break the flow and to concentrate the oil toward the central hole of the funnel 13. Inside said central hole a fin 19 is present so to avoid the casual introduction of rounds, caps or other inside the chamber 2 of the containers 1 together with the drained oil. During the use phase, so to change the motor oil, the container 1 is located, with the funnel 13 screwed on it, under the crankcase of the motor vehicle with the cap 6 closed and the vent hole 20 opens. Said vent hole 20, to be used as gas vent, has an inside thread 21 and it is to be closed through a cap 22 with thread 23 and with interposition of an O-ring 24. After the oil has been drained from the engine with discharge inside the container, the cap 22 is screwed again on the vent hole 20 and the funnel 13 is taken away with manual unscrewing from the hole 14 with thread 15. It is then provided a second threaded cap 25 screwed inside the threaded blind hole 26. Said cap 25, at the end of the oil discharge, with interposition of an O-ring 27 is used to close the hole 14 on which the funnel 13 was placed. So, closed all the openings with caps 22 and 25, the drained oil is transported in the oil disposal collection center in the wanted time and way. To allow the oil inside the contained to be poured into the appropriate collection containers the cap 6 is removed and the emptying is actuated. The invented plastic container, differently to the known containers with funnel-shaped top wall, has removable elements on the top of the same container 1. Therefore this permits, differently from what known in the art, to use the removable funnel 13 also for the oil enter or for the topping-up. To make these works two collecting elements 28 and 29 are provided to be used for all the oil inlet holes inside the engine. Said collecting elements 28 and 29 have collars 30 and 31, to make easy the grip, and threads 32 and 33 in the inside cylindrical part corresponding to the thread 15 of the cylindrical protrusion of the funnel 13. During the no-use phase said collecting elements 28 and 29 are fitted inside the cylindrical blind holes 34 and 35 provided on the plastic container 1. To make the inlet of the oil inside the motor, or to actuate a topping-up, the funnel 13 is screwed in one of the collecting elements 28 or 29 on the base of the size of the inlet hole of the motor of the vehicle. Ending said operation the funnel and the collecting element are screwed and they are placed again onto the container with joint or screwing.

## Claims

1. Container for collecting and transporting drained oil from a vehicle consisting of a plastic body (1) with inside chamber (2) able to collect and to transport the drained oil and having on one side a handle (3) and on the opposite side a cylindrical protrusion (4) with a mouth to be closed through a cap (6); **characterized in that:**
- an outside wall of the plastic body (1) has a recess (12) where are to be positioned removable elements to be used for the oil changing and for adding new oil inside the vehicle's engine, comprising a funnel (13) to be screwed during the oil discharge into a hole (14) arranged on the container, a cap (25) that at the end of the oil discharge is used to close the hole (14) on which the funnel (13) was placed and two collecting elements (28, 29) positionable onto the oil inlet hole of the vehicle's engine, where upon the funnel (13) can be placed for allowing the pouring of new or topping up oil.

2. Container for collecting and transporting drained oil from a vehicle according to claim 1, **characterized in that** to avoid oil losses an O-ring (8) is provided between the cylindrical protrusion (4) and the cap (6), an O-ring (17) is provided between the hole (14) and a cylindrical protrusion of the funnel (13), an O-ring (24) is provided between a vent hole (20) and a closing cap (22) and an O-ring (27) can be provided between the hole (14) and its closing (25).

3. Container for collecting and transporting drained oil from a vehicle, according to any of claims 1 or 2, **characterized in that** velcro^{®} parts (11) are provided to place the container in fixed way inside the boot of a vehicle.

4. Container for collecting and transporting drained oil from a vehicle according to any of Claims 1 to 3 **characterized in that** the hole (14) arranged onto the container has an internal thread (15) mating with an outside thread (16) of the cylindrical protrusion of the funnel (13).

5. Container for collecting and transporting drained oil from a vehicle, according to any of claims 1 to 4, **characterized in that** to proceed with the oil change, the containers (1) with the funnel (13) screwed on it is located under the crankcase of the vehicle is engine with the cap (6) closed and the vent hole (20) open after the oil has been drained from the engine, the vent hole cap (22) is screwed on the vent hole (20), the funnel (13) is taken away and the hole (14) is closed with its cap (25).

6. Container for collecting and transporting drained oil from a vehicle, according to any of claims 1 to 5, **characterized in that** during the no-use phase the collecting elements (28, 29) are fitted inside cylindrical blind holes (34, 35) provided on the recess (12) of the plastic body (1).

## Patentansprüche

1. Behälter zum Auffangen von Motorenöl beim Ölwechsel, bestehend aus einem Kunststoffkörper (1) mit Innenkammer (2) zum Auffangen und Transportieren von gebrauchtem Motorenöl, wobei sich auf der einen Seite ein Griff (3) befindet und auf der gegenüber liegenden Seite eine zylinderförmige Ausstülpung (5) mit einer durch einen Schraubverschluss (6) verschließbaren Öffnung, **dadurch gekennzeichnet, dass**
- eine Außenwand des Kunststoffkörpers (1) weist eine Einbuchtung (12) auf, die der Unterbringung der abmontierbaren Teile dient, die beim Ablassen oder Hinzufügen des Motorenöls benötigt werden; es handelt sich dabei um einen Trichter (13), der sich zum Öffnung (14) schrauben lässt; einen Schraubdeckel (25), der nach dem Ölablassen zum Verschluss der Öffnung (14) dient, nachdem der Trichter (13) abgenommen wurde; zwei Sammelstutzen (28, 29), die auf die Motorenöl-Einfüllöffnung des Fahrzeugs gesetzt werden können und auf denen der Trichter (13) zum Motorenöl Ein- oder Nachfüllen befestigt werden kann.

2. Behälter zum Auffangen von Motorenöl beim Ölwechsel, nach Anspruch 1, **dadurch gekennzeichnet, dass** er, um das Auslaufen von Motorenöl zu verhindern , wie folgt ausgestattet ist: eine O-ring Dichtung (8) zwischen der zylinderförmigen Ausstülpung (4) und dem Schraubverschluss (6); eine O-ring Dichtung (17) zwischen der Öffnung (14) und der zylinderförmigen Ausstülpung des Trichters (13); eine O-ring Dichtung (24) zwischen der Entlüftungsöffnung (20) und dem Schraubverschluss (22); eine weitere O-ring Dichtung (27) kann sich zwischen der Öffnung (14) und ihrem Schraubverschluss (25) befinden.

3. Behälter zum Auffangen von Motorenöl beim Ölwechsel, nach jeglicher Ansprüche 1 oder 2, **dadurch gekennzeichnet, dass** der zusätzlich an einigen Stellen mit Klettband (11) ausgestattet ist, um den Behälter im Kofferraum eines Farhzeugs befestigen zu können.

4. Behälter zum Auffangen von Motorenöl beim Ölwechsel, nach jeglicher Ansprüche 1 bis 3, **dadurch gekennzeichnet, dass** die Öffnung (14) des Behälters im Innern eine Windung (15) aufweist, die zur Windung (16) an der Außenwand der zylinderförmigen Ausstülpung des Trichters (13) passt.

5. Behälter zum Auffangen von Motorenöl beim Ölwechsel, nach jeglicher Ansprüche 1 bis 4, **dadurch gekennzeichnet, dass** beim Ölwechsel der Behälter (1) mit aufgesetztem Trichter (13) unterhalb des Motorengehäuses positioniert wird; dabei ist der Deckelverschluss (6) zu und die Entlüftungsöffnung (20) auf; nach Ablassen des Motorenöls, lässt sich der Deckel (22) der Entlüftungsöffnung (20) auf dieselbe schrauben, der Trichter (13) entfernen und die Öffnung (14) mit ihrem Deckel (25) verschließen.

6. Behälter zum Auffange von Motorenöl beim Ölwechsel, nach jeglicher Ansprüche 1 bis 5, **dadurch gekennzeichnet, dass** sich die Sammelstutzen (28, 29) die Nichtgebrauch in die zylinderförmigen Vertiefungen (34, 35) in der Einbuchtung (12) des Kunststoffkörper (1) stecken lassen.

## Revendications

1. Récipient pour vidanger un moteur fait d'un corps plastique (1) ayant un caisson intérieur (2) à même de regrouper et transporter l'huile déja employée, ayant un coté per une manche (3) et, de l'autre coté une saillie cylindrique (4) avec une ouverture qui doit être formée à l'aide d'un bouchon (6); charactérisée par:
- une parois exterieure du corps plastique (1) présente un enfoncement (12) où on peut bien positionner les composants amovibles qui doivent être employés pour changer de l'huile ou en ajouter de l'autre à intérieur du moteur du véhicule, y inclus un entonnoir (13) qui doit être vissé pendant le déchargement de l'huile à l'intérieur d'un trou (14) prevu sur le récipient, un bouchon (25) qui, au moment où le déchargement de l'huile est accompli, doit être employé pour fermer le trou (14) sur le quel se trouve colloqué l'entonnoir (13) et deux collecteurs (28, 29) qu'on peut positionner sur les trous d'entrée de l'huile du moteur du véhicule, sur le quel l'entonnoir (13) peut à sa foirs être positionné afin de permettre l'immission de huile pas ancore employeé.

2. Récipient pour vidanger un moteur, selon la revendication 1, charactérisée par le fait que, afin d'éviter pertes d'huile on a prevu un O-ring (8) entre la saillie cylindrique (4) et le bouchon (6), un O-ring (17) entre le trou (14) et la siallie cylindrique de l'entonnoir (13), un O-ring (24) entre le trou d'échappement (20) et le bouchon de fermeture (22) et enfin un O-ring (27) peut être prevu entre le trou (14) et son bouchon de fermeture (25).

3. Récipient pour vidanger un moteur, selon le revendications de 1 à 2, charactérisée par le fait que on a prevu des portions en velcro (11) pur fixer le récipient à l'intérieur du ports-bagages d'un véhicule.

4. Récipient pour vidanger un moteur, selon le revendications de 1 à 3, charactérisée par le fait que le trou (14) prevu dans le récipient prevoit un filétage intérieur (15) correspondant au filetage exterieur (16) de la saillie cylindrique de l'entonnoir (13).

5. Récipient pour vidanger un moteur, selon le revendications de 1 à 4, charactérisée par le fait que pour changer l'huile, le récipient (1) aven son entonnoir (13) doit être positionné sous l'embasement du moteur du véhicule tout en gardant le bouchon (6) fermé et le trou d'echappement (20) ouvert, après que l'huile a été déchargée du moteur, le bouchon (22) du le trou d'echappement est fermé à le trou d'echappement (20), le entonnoir (13) est enlevé et le trou (14) est fermé à l'aide de son bouchon (25).

6. Récipient pour vidanger un moteur, selon le revendications de 1 à 5. charactérisée par le fait que pendant la phase de non-emploi les collecteurs (28, 29) sont emboités à l'intérieur des trous cylindriques aveugles (34, 35) prevus sur le enfoncement (12) du corps plastique (1).
